# EUROPEAN PATENT SPECIFICATION

(11) **EP 1 523 738 B1**
(45) Date of publication and mention of the grant of the patent: **28.02.2007**
(21) Application number: 02765325.2
(22) Date of filing: 16.07.2002
(51) Int. Cl.: G08B 17/12

(54) **SYSTEM AND METHOD FOR TERRITORY THERMAL MONITORING**
SYSTEM UND VERFAHREN ZUR THERMISCHEN ÜBERWACHUNG EINES GEBIETES
SYSTEME ET PROCEDE DE CONTROLE THERMIQUE D'UN TERRITOIRE

(43) Date of publication of application: 20.04.2005
(73) Proprietor: GS Gestione Sistemi S.r.l., 00178 Roma (IT)
(72) Inventor: BERTI, Umberto, I-00184 Roma (IT)
(74) Representative: Papa, Elisabetta
(86) International application number: PCT/IT2002/000464
(87) International publication number: WO 2004/008407

(56) References cited:
- WO-A-97/35433
- DE-A- 3 710 265
- US-A1- 2002 026 431

## Description

The present invention relates to an environment monitoring system and to a related method.

In particular, the invention relates to an integrated system for detecting critical thermal levels in the environment. In a specific application thereof, the invention provides a system for detecting fires within wooded areas. In alternative applications, the invention generally relates to a system for detecting critical thermal variations in any type of environment, and in particular in industrial facilities, buildings and so on.

Temperature is a very important parameter in many fields. For instance, in industrial facilities temperature can influence the correct operation of plants and equipment.

Moreover, in any field a temperature rise can lead to fires or, in fact, indicate the presence of flames.

Although safety systems are known which are able to measure temperature in environments that are potentially at risk of thermal damage, the starting and spreading of fires out of natural or induced causes is a very widespread problem today, entailing a dramatic impact on the environment and having serious economic implications. For instance, in the field of forestry, in spite of the efforts expended to improve the timeliness and effectiveness of extinguishing operations, every year fires destroy very large portions of wooded areas.

US 2002/0026431 discloses a fire detection system comprising surveillance satellites having fire detection means based on imaging equipment, surveillance aircraft or balloons also carrying said fire detection equipment, fire control headquarters in communication with said satellites and crafts and remote centers for helping the headquarters in the control and coordination of fire fighting resources. The remote centers are in voice communication with headquarters for full coordination. In addition to the satellites and the crafts, also selected fire fighting resources can have video or infrared sensors for detecting fire. Control centers, satellites, surveillance crafts and fire fighting resources are also apt to update the headquarters with weather information. US 2002/0026431 also mentions that infrared sensing units can be located on towers communicating with headquarters or remote centers.

Therefore, in summary US 2002/0026431 provides for a fire fighting system wherein multiple resources - and specifically satellites, crafts and eventually selected fire fighting resources - are used for detecting fire by imaging techniques and wherein local control centers and headquarters are used for detecting weather conditions and for coordinating such resources.

The technical problems constituting the basis for the present invention, therefore, is to provide an environment monitoring system and a related method that allow to improve the rapidity and effectiveness of operations aimed at limiting and/or containing damages in case of critical temperature rise and in particular of operations for extinguishing a fire event.

Said problem is solved by a system as claimed in claim 1.

According to the same inventive concept, the present invention also relates to a method according to claim 23.

In the present context, the expression "environment monitoring" is to be construed in the broad sense, as referred to the monitoring of any kind of environment, in particular wooded areas, natural parks, agricultural areas, civil areas, military areas, industrial areas, specific facilities and/or buildings and/or areas delimited thereby, and so on.

Moreover, the term "critical temperature variations" herein indicates temperature variations apt to cause damages in the monitored environment, for instance variations that indicate the onset of a fire.

The present invention provides some important advantages. The main advantage is that the integrated processing of locally acquired data with those known a priori and stored at the central control station level allows to optimise the time and quality of the operations aimed at limiting the consequent damage.

Other advantages, characteristics and employment procedures of the present invention shall become readily apparent from the following detailed description of some embodiments, provided by way of non limiting example. Reference shall be made to the figures of the accompanying drawings, in which:
Figure 1 shows a block diagram of an embodiment of the environment monitoring system according to the present invention;
Figure 2 shows a perspective view of an embodiment of a device for monitoring the temperature in a territory of the system of Figure 1;
Figures 3A and 3B both refer to an alternative embodiment of a detail of the device of Figure 2, respectively showing a perspective view and a longitudinal section view; and Figure 4 shows an embodiment variation of the device of Figure 2.

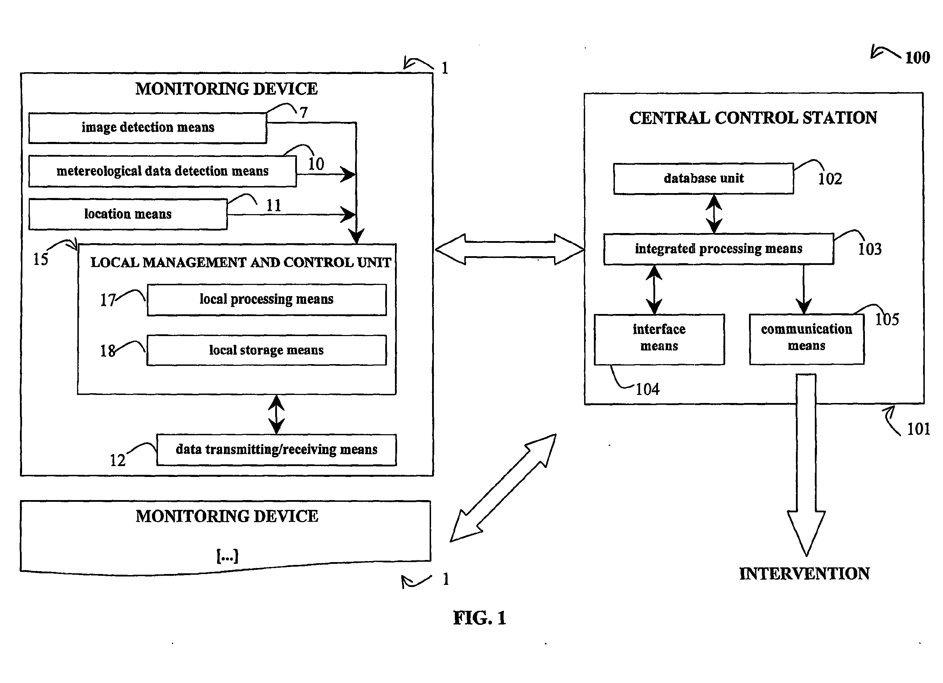

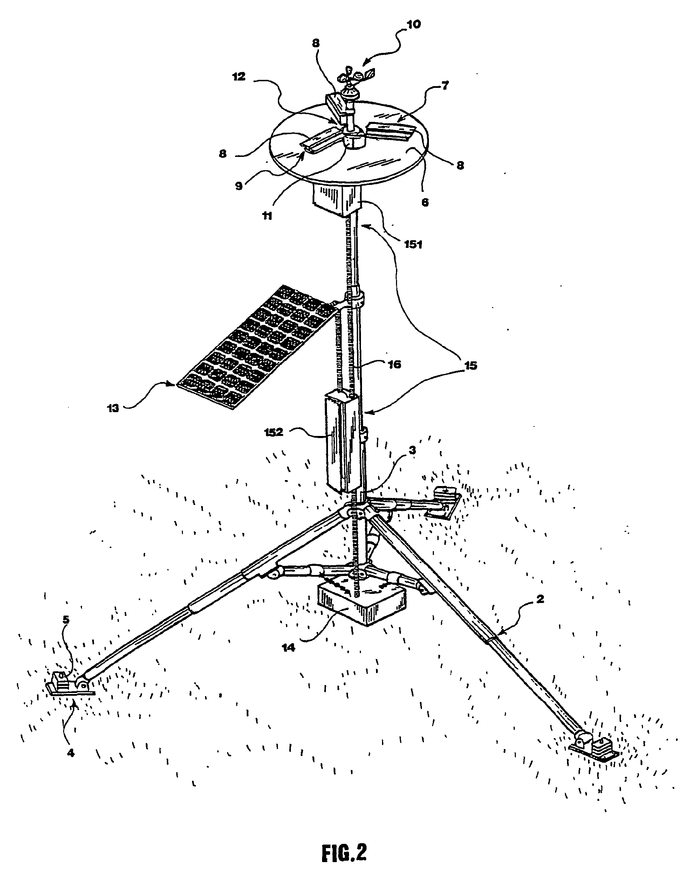

With reference initially to Figure 1, an environment monitoring system according to the present invention, and in particular a system for territory thermal monitoring, is globally indicated as 100. This comprises first of all a plurality of monitoring devices distributed over the territory to be monitored, one of which is shown in greater detail in Figure 2 and is globally indicated as 1. Typically, the devices 1 will be distributed over a larger or smaller area according to the requirements of the application; for instance, it could be a forest area for the application of detecting and preventing forest fires.

As stated above, the expression "environment monitoring" is to be construed herein in its broadest sense.

Purely by way of example, the invention shall be described hereafter with reference to a specific application thereof, i.e. the aforesaid monitoring of a forest area, natural park or agricultural area.

Each device 1 is apt to continuously provide to a remote central control station 101 data on the environmental conditions of the monitored portion of territory, and to detect temperature anomalies thereof, in particular the thermal breaking point that is cause of possible fires.

In case of alternative applications of the invention, for instance for monitoring industrial facilities or areas, the aforesaid thermal breaking point may instead also indicate an imminent technical operating failure and/or environmental damage.

To perform the aforesaid function, the device 1 comprises a plurality of means for acquiring environmental data to be described shortly, each dedicated to the detection and measurement of specific local information and parameters.

With reference also to Figure 2, the aforesaid acquisition means can, according to the application whereto they are dedicated, be supported on a frame 2 of the device 1, which in the present embodiment comprises a structure 2 shaped substantially as a tripod and constructed with telescopic tubes. Said structure 3 is anchored to the ground by means of conventional fastening means 4, and it comprises a stabilisation ballast 5.

In correspondence with its upper portion, the structure 3 also sustains a platform 6 apt to support some of the aforesaid means for acquiring environmental data necessary for the intended aim.

In particular, the device 1 comprise image detection means 7 and thermal detection means 9, the latter apt to detect critical temperature variations in the area of interest, in the present application associated with the development of a flame, i.e. to identify temperature anomalies and possibly detect the flame core in the monitored portion of territory. Both said means 7 and 9 are suitable for various alternative embodiments.

Based on a first embodiment, whereto Figure 2 schematically refers, the image detection means 7 and the thermal detection means 9 comprise three common telecameras, housed on the platform 6 and each indicated with the reference 8. The telecameras 8 are positioned at a relative angular distance of about 120 degree from each other, in order to cover the surrounding space for 360 degrees. As shall be illustrated shortly, the telecameras 8 are apt to operate both in the visible and in the infrared range.

The telecameras 8, if necessary, are provided with actuation means (not show herein) that allow both lateral and up/down motions and that are commanded by a local management and control unit 15 to be described farther on. Also the operational parameters and the functions of the telecameras 8, for instance the close/far zoom function, can be commanded by the aforesaid local management and control unit 15.

Also in the embodiment of Figure 2, the thermal detection means 9 are of the multi-band type and apt to obtain, for each telecamera 8, infrared images, and hence emission of infrared energy potentially associated with the presence of thermal anomaly phenomena, for instance the presence of a flame.

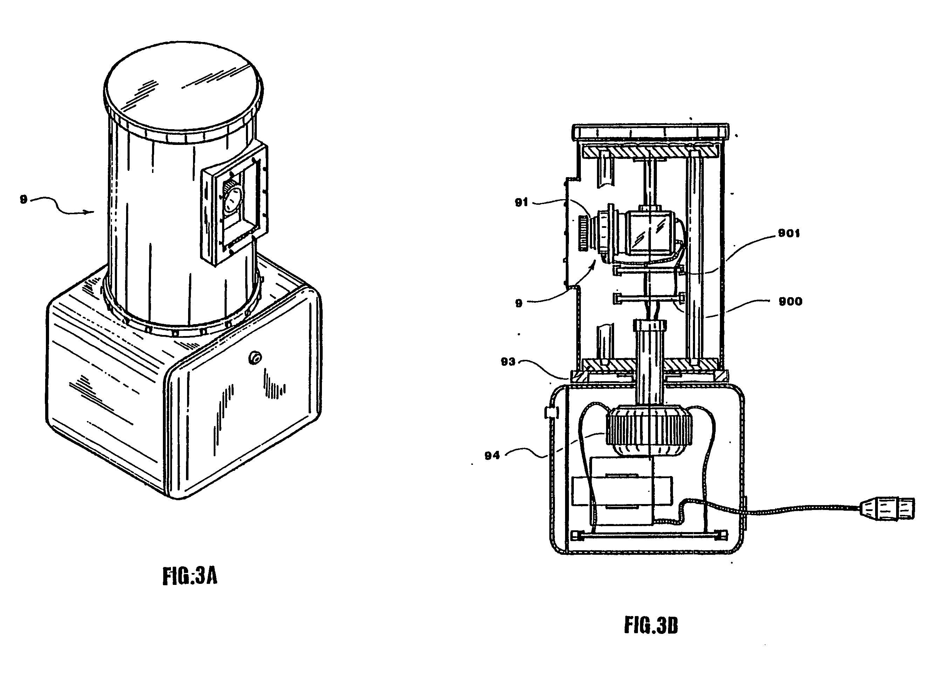

Based on a second embodiment, shown in detail in Figures 3A and 3B, the means 7 and 9 comprise a single common telecamera mounted on a rotatable platform 93 and otherwise similar to the telecameras of the first embodiment. Therefore, the means 7 and 9 of said first and second embodiments shall now be described in greater detail with reference to the aforesaid Figure 3A and 3B.

First of all, as mentioned above, the, or each, telecamera 8 provides both a visualisation means in the visible field and a thermal detection means for acquiring infrared images, i.e. it is a so-called thermo-camera. For this purpose, it is provided with an infrared microbolometric sensor. Moreover, with the telecameras 8 are associated two distinct acquisition boards, one, indicated as 900, for acquiring standard video images in the visible range and another, indicated as 901, for acquiring infrared images. These boards thus provide interface means between the telecamera (visible and IR) and the management and control unit 15.

Although the basic principle for the detection of images in the infrared range is well known, it is briefly described hereafter for the sake of greater completeness. Warm bodies emit electromagnetic radiation on multiple wavelengths. In particular, the warmer a body is, the more infrared radiation it will emit as an effect of the thermal agitation of its molecules or atoms. The specific spectral distribution of the emitted radiation depends on the nature of the body and on its temperature. For example, dark colours and opaque surfaces generally have high emissivity and irradiate with greater effectiveness.

Therefore, by detecting the infrared energy emitted by the bodies, the thermo-camera generates a real time image and provides a thermal trace of the scene, highlighting relative temperature differences between adjacent areas.

The aforesaid microbolometric sensor uses one or more appropriate lenses, for instance telescopic lenses, to develop a visual matrix in pixels, for instance a matrix (327×245), that is acquired by the thermo-camera and transmitted to the aforementioned local management and control unit 15.

As the person skilled in the art is well aware, the thermo-camera is apt to detect and amplify the electromagnetic energy emitted in the form of heat. The sensitivity of the thermo-camera provided in the present embodiment is such as to allow to detect temperature differences of less than 0.1°C.

The data of the thermo-camera are then converted, by the heat detection means 9 themselves, by the local management and control unit 15 of by the remote control station 101, into standard video format, in order to allow it to be easily displayed or recorded on digital support.

Since the thermal detection means 9 described above are implemented through means that are already known in the art, they shall not be further described herein. Nonetheless, for the sake of the completeness of the description and purely by way of indication, an example of their possible technical specifications, suitable for the present forest fire detection application, is provided hereafter.

The thermal bands and the operating characteristics of the thermal detection means 9 can be identified as follows:

| | |
|---|---|
| Spectral bands: NUMBER 4 | band 1: 8.2 +9.0 µm (heat mapping of the flames) |
| | band 2: 10.3 ÷11.3 µm (environmental mapping) |
| | band 3: 11.5 ÷12.5 µm (heat mapping of the flames) |
| | band 4: 8.2 ÷12.5 µm (large space mapping) |
| dynamic ranges | 0 to 400 xK (wide area coverage) |
| | 0 to 1300 xK (detected flame mapping) |
| NEDT @ 300 xK | 0.005 xK (80-12.5 U) |
| Spatial resolution | 0.9 mr |
| Surveillance area - elevation | 17 degrees |
| azimuth | selectable (pan coverage) 0 to 360 degrees |
| optics | 50 mm f/0.73 |
| calibration | Real time, multi-level through the lenses |
| weight | about 25 kg |
| dimensions | (23x31x56) cm |
| absorption | 35W |
| Power supply | 28V DC or 230V 50 Hz |
| data rate | 41 Kbytes/s |
| data display | Real time - calibrated in the video |
| data recording | 8 mm |

Also purely by way of indication, provided below is an example of technical specifications of the thermo-camera, suitable to the present fire detection application.

| | |
|---|---|
| detector | 327x245 uncooled microbolometer FPA |
| FOV | standard 50 mm lens (F0.7): 20x20 |
| Heat sensitivity | 0.1 °C @ 30 °C |
| accuracy | +2 °C or 2%Fs |
| Spectral band | 8-12, 5um |
| Measuring range | -10 °C to 400 °C (extensible to 1000 °C) |
| display | 4 inch colour TFL LCD, high luminance |
| frame rate | 30 Hz |
| Working temperature | -10 °C to 40 °C |
| battery | Li-Ion etc. |
| power input | battery or DC direct input selectable |
| video output | RS 170, RGB |
| colour palettes | 4 sets |
| functions | focus, colour palette, store, play and freeze image, auto image, manual image, movable temperature cursor on both live and frozen images, emissivity settings |
| image storage | 52 images in 32 Mb Pc card |
| compensations | Temperature compensation for background, ambient temperature, distance and humidity |
| dimensions | (177×110×142) mm without lenses |
| weight | 2.1 kg |

With reference now again to Figures 1 and 2, the device 1 also comprises additional means 10 for measuring environmental data, in particular meteorological data, also housed on the platform 6. In turn, said means 10 comprise sensor means apt to measure wind speed and direction, humidity, pressure, temperature of the air, of the ground, dew temperature.

It will be readily apparent that alternative applications of the system of the invention can provide for measuring additional environment data and parameters considered necessary for the operative application of the system.

On the platform 6 are also supported location means 11 of the device 1, in particular a GPS system ("Global Positioning System''), apt to allow the automatic determination of the geographic co-ordinates (latitude, longitude and altitude over sea level) of the device 1 itself.

The device 1 further comprises means 12 for transmitting/receiving data to/from the aforementioned remote central control station 101, based for instance on GPS/GPRS or UMTS telephone transmission technology, on a fibre optics transmission technology, on a radio-frequency transmission technology in general or on dedicated data lines (Ethernet). Said means 12 allow, among other things, the transmission of data, also in the form of images, acquired by the different acquisition means introduced heretofore to the remote central control station 101. In the present embodiment, the means 12 are implemented by means of a data translation system (e.g. network board for data line or optical transducer for fibre optics, etc.) positioned in correspondence with the platform 6 or fastened on the tripod structure 3 inferiorly to the platform 6 itself.

In the present embodiment, the device 1 also comprises self-powering means 13, in particular a photovoltaic panel and associated known means for converting and transmitting energy. Moreover, the device 1 also comprises energy accumulators or batteries 14, associated to the photovoltaic panel or independent therefrom.

As an alternative or in association with the self-powering means just introduced, the device 1 can comprise a power supply from the electrical mains.

The device 1 lastly comprises the aforementioned local unit 15 for managing and controlling its various components, which naturally is in bilateral communication with all the components introduced heretofore, and in particular with the transmission/reception means 12 for sending data to the remote central control station 101.

In Figure 2, the unit 15 is represented as physically subdivided in two connected sub-units, and in particular a first sub-unit 151, comprising the electronics for managing and controlling the telecameras 8, of the thermal detection means 9 in general and of the GPS system 11, and a second sub-unit 152, comprising means for managing and controlling the remaining components of the device 1. In any case it is clear that the unit 15 can be entirely housed inside a single case, or be divided into more than two sub-units, physically separated and mutually connected.

In the present embodiment, the connection between the unit 15 and the different components of the device 1 and the connection between the sub-units 151 and 152 are achieved by means of conventional data transmission lines 16, shielded for instance by means of corrugated pipes.

The unit 15 comprises means 17 for locally processing the data acquired by the different environmental acquisition means of the device 1.

In particular, the unit 15 comprises means for processing the data coming from the thermal detection means 9, which processing means are apt to compare the obtained data with pre-determined thresholds to detect temperature variations to be considered critical for the type of environment monitored.

In the present embodiment, the aforesaid means for processing the data coming from the thermal detection means 9 operate as follows. Said processing means receive from the means 9 the aforesaid visual matrix in pixels and analyse it by means of a known algorithm which provides for an infrared scan over a plurality of appropriate thermal bands apt to digitise a spectrum with at least 80,000 pixels.

In particular, the processing means perform the correction of the scanned pixels and define calibration parameters automatically, by means of a specific known analysis algorithm. The first scan is interpreted and analysed in a base band (wide infrared band 2÷100 µm). In case of parameter anomaly of one of the 80,000 or more pixels into which the image is divided, the analysis of the event is re-processed on other thermal bands suitable for the purpose, in order to identify in particular the pixel that generated the anomaly and to analyse the anomaly in greater detail. If the anomaly is due to an event considered critical, i.e. apt to have harmful consequences on the territory (or, in a different application, with possible negative effects on the operation of a monitored plant), such as, in the example at hand, a fire, the processing means record the event digitising the images and sending an alarm signal to the remote central control station 101. Said alarm signal is thus typically associated to the detection of energy emissions of a predetermined entity, i.e. exceeding a predetermined threshold. Otherwise, i.e. if the anomaly is classified as not due to a critical event, but to other events such as the passage of a motor vehicle or an anomalous and temporary thermal flow, the processing means automatically raise the detection threshold for that given pixel and reprocess the scan so that no alarm signal is generated. This technology, for instance in the field of application for monitoring and controlling forest fires, allows to detect a flame with a height of about 20 cm at a distance of about 10 km, without generating false alarms.

Upon detection of an anomaly, the processing means can also command the related telecamera 8 for the acquisition of images in the visible range of the area where the supposed critical event is developing.

In case of large areas to be monitored, the local processing means 17 are also apt to compute, co-operating with the aforesaid GPS 11 system, the geographic co-ordinates of the critical fire event detected, i.e. of the temperature variation assessed as critical.

In the present embodiment, the local unit 15 transmits to the central control station 101, through the means 12, the images acquired by the telecameras 8 in visual and infrared mode in digitised form.

The unit 15 also comprises means for locally storing the acquired data, possibly after their processing, which means 18 may possibly be associated with an analogic/digital converter of the data.

In embodiment variations, the processing of the data acquired locally by the device 1, and in particularly the processing of the data coming from the thermal detection means 9 described above, can be performed directly by specific processing units incorporated in the acquisition means themselves or remotely, i.e. in the central control station 101.

Since the local management and control unit 15 and the related data transmission, processing and storage means can be implemented by means of conventional hardware and/or software components, they shall not be described any further herein.

With reference now to Figure 1, the central station 101 is apt to receive and transmit data from/to the local devices 1, to manage the acquisition means thereof and to alert competent authorities in case of detection of a temperature anomaly and/or possible fires. For this purpose, the central station 101 comprises processing means, storage means and means for interfacing with its operators which are described hereafter.

First of all, the central station 101 comprises a plurality of storage units, hereinafter referred to as database units 102, each apt to store logistical, technical and/or topographic information about the environment to be monitored, necessary for an integrated processing of the data coming from the local devices 1.

In particular, the central station 101 comprises:
- a unit for storing information about the topography of the monitored territory, with particular reference to the characteristics of the access roads and paths and of the access modes, to the morphological-naturalistic makeup and to the technical characteristics of the territory itself (for instance areas of forest, underbrush, brushwood and so on), to the location, dimension and availability of water supply points, to the use whereto the area is destined (for example, farmland, natural park, industrial area and so on) and to the structures present on the monitored territory, with particular regard to those that during fires can represent a hazard for the equipment and the operators, for instance storage areas for highly flammable material, methane pipelines and/or electrical lines, motorway routes, tunnels, underground railways (in alternative applications, said unit will also store information about the mapping of the area and/or monitored facilities, with particular reference to the accessing characteristics and/or positioning of the equipment causing the alarm);
- a unit for storing information about the available rescue means, both in terms of cooling and/or extinguishing equipment/apparatuses and of human resources, in particular about the position and availability thereof- the latter information can be updated in real time by means of a direct and continuous connection of the central station 101 with the bodies responsible for the equipment, personnel and/or command for the operation of the facilities at issue; and
- a unit for storing information about the location and addresses of all official authorities with cognisance over the area (for example, the fire-fighting rescue squad, the fire brigade command, the forestry corps, the civil protection authority, military airports, police and military posts, hospitals, and so on, or, in alternative applications, for example the organisation tasked with maintaining the facility), about the human resources available thereto and any private citizens/entities owning the area and/or facilities and/or machinery- also the latter information can be updated in real time by means of a direct and continuous connection of the central station 101 with the cognisant organisations.

The aforesaid information about the intended use for the area (or, in alternative applications, about facilities and/or machinery) and to its morphological and naturalistic makeup can also be updated in real time by means of the data acquired by the local monitoring devices 1.

Naturally, all database units 102 can be implemented by means of a single archive divided into appropriate sections.

The central station 101 also comprises means 103 for the integrated processing of the data coming from the different monitoring devices 1 distributed over the areas of interest (or, in alternative applications, inside the facilities). Said integrated processing means 103 are apt to process the data coming from the local devices 1 and the information contained in the aforesaid database units 102, in such a way as to provide the operators of the central station 101 and/or additional connected operative centres with output information allowing to plan the operations with exactness.

First of all, the integrated processing means 103 are apt to extract from the aforesaid database units 102, upon specific interrogation and/or automatically, all the information referring to the specific area involved with the event as identified in the alarm signal send by one or more of the local monitoring devices 1.

Moreover, said integrated processing means 103 are apt to compute a model of the evolution of the fire event (or, in alternative applications, of the thermal front, i.e. of the propagation of the heat wave) according to the data provided by the thermal detection means 9, to the environmental parameters provided by the means 10 and to the morphological and naturalistic characteristics of the involved area stored in the appropriate database unit 102, identifying the areas potentially exposed to the risk of damage and/or fire surrounding the zone where the thermal anomalies and/or flames were detected.

The integrated processing means 103 are also apt to prepare a plan of intervention, indicating the methods and paths available among those stored in the appropriate database unit 102 and proposing an optimal plan for reaching the area involved in the processed event considering the aforesaid model of evolution of the fire event, the number and the type of rescue means and human resources currently available in proximity to the interested area or potentially involved by the flames, the logistical-topographic characteristics of the area and the need to minimise the time needed to reach said area.

The processing means 103 are also apt to provide multiple alternative processes and paths, associating to each of them an estimate of the time required to intervene and extinguish the fire, i.e. in general of the starting and/or ending times of the intervention.

Moreover, the processing means 103 can also adaptively modify the evolution model of the aforesaid fire event as a function of the intervention plan selected by the operators by means of appropriate interface means of the central station 101.

In the present embodiment, the model of evolution of the fire is based on a function with (n + 4) variables, function which is defined according to the specific intended application of the system. The n variables are determined by the specific territory to be monitored, for instance wooded area or industrial facility, the remaining four are time and the three spatial co-ordinates.

The foremost hypothesis for determining the model of evolution is based on the analysis of the evolution of the event under standard and/or ideal conditions, in an isotropic and homogeneous medium, defined as model zero. Under such conditions, the development system is known, analysable and reproducible. In the basic model analysed by modifying the parameters of the base model itself and introducing the values detected on site, the values of the environmental variables that are significant for the evolution are modified, and the new descriptive algorithm thereof is determined.

The significant variables for the event are those that were determined and fixed during the analysis of the basic model (ideal conditions). In the application of the system to forest fires, the basic variable are:
- Air temperature;
- Air relative humidity;
- Atmospheric pressure;
- Wind intensity;
- Wind direction;
- Ground temperature;
- Ground humidity;
- Biomasses present (material fire charge);
- Morphology of the territory.

In the determination of the basic model, the variables for which it is acceptable are set to zero (absence of wind), the other are set to a standard defined value (e.g. T= 30 °C, P = 1 bar etc.).

Always in the present embodiment, the model followed to develop the intervention plant to be implemented is based on the ideal intervention that should be carried out on the basic model (ideal conditions), when the propagation front of the event, in particular of the heat and/or of the fire, has reached the size of the one set at time t.

Inserting in this model all the environmental parameters measured in real time, the information stored in the units 102 and relating to the means available and to the intervention times thereof, the optimal intervention plan is prepared, which can also be modified adaptively according to the real time acquisitions of the acquisition means of the local devices 1 and of the measurements taken on site by the intervention teams and communicated to the central station 101 through conventional data transmission/reception means.

The processing means 103 can also, according to the processed evolution model, classify the event with a danger index, estimating its possible environmental and economic consequences.

The danger index can help assess, in case of simultaneous alarm events, the correct allocation of the available resources.

As mentioned above, the aforementioned processing of the data provided by the thermal detection means 9 can also be carried out by the integrated processing means 103 rather than by the local management and control unit 15.

The central station 101 further comprises interface means 104 for communicating the data acquired by the local devices 1 and the data processed in integrated fashion by the means 103 to the operators of the central station itself and to allow the operators themselves to interrogate the central station 101 and manage the local devices 1. Said interface means 104 comprise for example a plurality of units for displaying the images in the visible and/or infrared band sent by the different local control devices 1 and a console for managing the measured data.

The central 101 further comprises communication means 105 dedicated to alert and send instructions to the cognisant bodies for carrying out the intervention plan on a local, provincial, regional and national scale. In particular, the central station 101 can be connected to maintenance teams, the fire brigade, the national forestry corps, civil protection, local agencies (towns, provinces), volunteer organisations, mountain communities, ministries, WWF, local health care unit, police, transport agencies, road agency, energy agency, information media, airports and so on.

Since also the central station 101 can be implemented by means of known hardware and/or software means, it will not be described any further herein.

It will therefore be more readily apparent at this point that the system of the invention allows to detect, locate and display a significant temperature variation deemed critical for the development of a fire, for the normal operation of a facility and so on, and to process and transmit information about the critical event detected and about the intervention for its containment / extinguishing in real time and twenty-four hours a day.

The system of the invention thus allows effective and safe interventions.

It will also be readily apparent that the present invention can be subject to numerous forms and embodiment variations, alternative to those described heretofore. First of all, the detection means apt to detect the presence of temperature variations can have multiple alternative implementations (detection of fires, mechanical malfunctions, modifications of the molecular state, etc.).

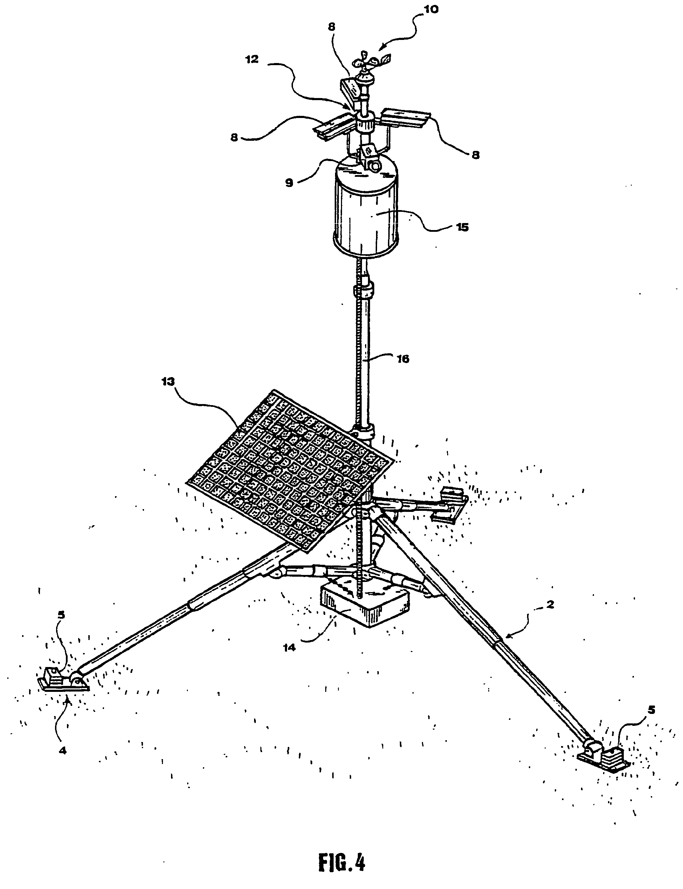

For instance, based on the embodiment shown in Figure 4, the thermal detection means, in this case also indicated as 9, are implemented by means of an infrared telecamera mounted on a rotatable platform similar to that of the embodiment described with reference to Figures 3A and 3B. Unlike the latter embodiment, however, the aforesaid thermo-camera is complemented by three telecameras 8 operating only in the visible range and positioned at an angular distance of about 120 degree from each other. The remaining components of the device shown in Figure 4 are wholly similar to those of the first embodiment described above, with the exception of the photovoltaic 13, which has a greater capacity, and of the management and control unit 15, which is constructed in a single body.

Moreover, the local devices can employ as support structures, instead of the dedicated frame based on a tripod structure described above, structures already existing on the territory, for instance uprights, trestles or supporting posts for telephone or electrical power lines.

Based on a simplified embodiment, the system of the invention comprises a single local monitoring device.

The present invention has been described heretofore with reference to preferred embodiments. It is understood that other embodiments derived from the same inventive core can exist, all covered by the scope of protection of the claims set out below.

## Claims

1. An environment monitoring system (100), comprising:
- at least an unmanned, ground local device (1), apt to be installed in the environment to be monitored and having acquisition means (7, 8, 9, 10) for acquiring environmental data apt to detect critical thermal variations in the area of interest;
- a central control station (101), comprising storage means (102) for storing logistical-technical data and data about the available intervention means pertaining to the monitored environment;
- means (12) for transmitting/receiving data, for bilateral communication between said central control station (101) and said at least one local device (1); and
- means (103) for the integrated processing of the environmental data acquired by said at least one local device (1) and of the data contained in said storage means (102), apt to provide as their output a model of evolution of the thermal front consequent to a critical thermal variation and an intervention plan for limiting the damages associated therewith,
wherein said acquisition means of said at least one local device (1) comprises: fire detection means (9) for detecting energy emissions in the infrared range; meteorological data detection means (10); and image acquisition means (7) comprising at least a telecamera (8) that operates in the visible range, wherein said fire detection means (9) are apt to determine the activation of said telecamera (8) in response to the detection of energy emissions exceeding a predetermined threshold, and wherein said at least one local device (1) comprises also self-powering means (13, 14) and a support structure (3) supporting said acquisition means (9) and apt to be anchored to the ground at a desired location.

2. The system (100) as claimed in claim 1, comprising a plurality of local devices (1) apt to be installed in the environment to be monitored.

3. The system (100) as claimed in any of the previous claims, comprising means (17) for processing the energy emissions detected by said detection means (9) apt to analyse said emissions on a plurality of emission bands.

4. The system (100) as claimed in any of the previous claims, wherein said detection means (9) comprise at least a thermo-camera operating in the infrared range.

5. The system (100) as claimed in the previous claim, wherein said thermo-camera is provided with an infrared micro-bolometric sensor.

6. The system (100) as claimed in any of the previous claims, wherein said means (12) for transmitting/receiving data are able to transmit images from said one or more local devices (1) to said central control station (101) in a visible and/or infrared mode.

7. The system (100) as claimed in any of the previous claims, wherein said meteorological data detection means (10) comprise acquisition means selected within a group comprising means for measuring wind velocity and direction, humidity, pressure, air and ground temperature and dew temperature.

8. The system (100) as claimed in the previous claim, wherein said meteorological data detection means (10) are implementable with sensors for detecting parameters considered necessary for the correct analysis of the phenomenon of thermal variations and of its model of evolution.

9. The system (100) as claimed in any of the previous claims, wherein said acquisition means comprise location means (11) apt to allow the automatic determination of the geographic co-ordinates of the related local device (1).

10. The system (100) as claimed in any of the previous claims, comprising means (17, 11) apt to determine the geographic co-ordinates of a thermal variation detected by said means (9) for acquiring environmental data.

11. The system (100) as claimed in any of the previous claims, wherein at least one of said one or more local devices (1) comprises local processing means (17) of the acquired data.

12. The system (100) as claimed in any of the previous claims, wherein at least one of said one or more local devices (1) comprises local storage means (18) of the acquired data.

13. The system (100) as claimed in any of the previous claims, wherein said support structure (3) for supporting said acquisition means (9) has a substantially tripod shape.

14. The system (100) as claimed in the previous claim, wherein said support structure (3) comprises a platform (6) positioned in correspondence with an upper portion of the structure itself.

15. The system (100) as claimed in any of the previous claims, wherein at least one of said one or more local devices (1) comprises a rotatable platform (93) for supporting said acquisition means (7, 8, 9, 10).

16. The system (100) as claimed in any of the previous claims, wherein said intervention plan contains the indication of at least one optimal access path for reaching the area involved by a critical thermal variation.

17. The system (100) as claimed in any of the previous claims, wherein said intervention plan contains an estimate of the starting and/or ending times of the intervention.

18. The system (100) as claimed in any of the previous claims, wherein said central control station (101) comprises interface means (104) to allow the operators to select an intervention plan and wherein said integrated processing means (103) are apt to adaptively modify said model of evolution of the thermal front according to the intervention plan selected by the operators of said central control station (101).

19. The system (100) as claimed in any of the previous claims, wherein said integrated processing means (103) comprise means apt to classify the detected thermal variation according to a danger index.

20. The system (100) as claimed in any of the previous claims, wherein said central control station (101) comprises interface means (104) apt to communicate to the operators the data acquired by the one or more local devices (1) and the output data from said integrated processing means (103) and apt to allow the interrogation of said storage means (102).

21. The system (100) as claimed in any of the previous claims, wherein said central control station (101) comprises interface means (104) apt to allow the management of said acquisition means (7, 8, 9, 10) of the one or more local devices (1) by the operators of said central station.

22. The system (100) as claimed in any of the previous claims, comprising means (105) for communicating with agencies for implementing said intervention plan.

23. A method for environmental monitoring, comprising the phases of:
(a) installing on the territory to be monitored at least one unmanned, ground local device (1) having acquisition means (7, 8, 9, 10) for acquiring environmental data apt to detect critical thermal variations in the area of interest;
(b)storing in a central control station (101) logistical-technical data and data about the available intervention means relating to the monitored environment; and
(c)processing, in an integrated mode, the acquired environmental data and the stored logistical-technical data in such a way as to provide a model of evolution of the thermal front consequent to a critical thermal variation and an intervention plan for limiting the damages associated therewith,
wherein said acquisition means of said at least one local device (1) comprises: fire detection means (9) for detecting energy emissions in the infrared range; meteorological data detection means (10); and image acquisition means (7) comprising at least a telecamera (8) that operates in the visible range, wherein said fire detection means (9) are apt to determine the activation of said telecamera (8) in response to the detection of energy emissions exceeding a predetermined threshold, and wherein said at least one local device (1) comprises self-powering means (13, 14) and a support structure (3) supporting said acquisition means (9) and apt to be anchored to the ground at a desired location.

24. The method as claimed in claim 23, wherein said phase (a) provides for installing a plurality of acquisition means (7, 8, 9, 10) distributed in the environment to be monitored.

25. The method as claimed in claim 23 or 24, comprising a phase of processing the energy emissions detected by said detection means (9) wherein the acquired data are analysed on a plurality of emission bands.

26. The method as claimed in any of the claims from 23 to 25, comprising of phase of transmitting data from said acquisition means (9) to said central control station (101) that provides for the transmission of images in a visible and/or infrared mode.

27. The method as claimed in any of the claims from 23 to 26, comprising a phase of determining the geographic co-ordinates of a thermal variation detected by said means (9) for acquiring environmental data.

28. The method as claimed in any of the claims from 23 to 27, wherein said intervention plan contains the indication of at least one optimal access path for reaching the area affected by a critical thermal variation.

29. The method as claimed in any of the claims from 23 to 28, wherein said intervention plan contains an estimate of the starting and/or ending times of the intervention.

30. The method as claimed in any of the claims from 23 to 29, wherein said phase (c) provides for an adaptive modification of the evolution model of the thermal front according to the intervention plan selected by the operators of said central control station (101).

31. The method as claimed in any of the claims from 23 to 30, wherein said phase (c) provides for classifying the detected thermal variation according to a danger index.

## Patentansprüche

1. Umgebungsüberwachungssystem (100), mit:
- wenigstens einer unbemannten, auf dem Boden anzuordnenden lokalen Vorrichtung (1), die dafür ausgebildet ist, in der zu überwachenden Umgebung installiert zu werden, und Erfassungseinrichtungen (7, 8, 9, 10) zum Erfassen von Umgebungsdaten hat, welche dafür ausgebildet sind, kritische thermische Veränderungen in dem interessierenden Bereich zu erkennen;
- einer zentralen Steuerungsstation (101), die eine Speichereinrichtung (102) aufweist zum Speichern von logistischen technischen Daten sowie von Daten über verfügbare Interventionseinrichtungen, die zu der überwachten Umgebung gehören;
- einer Einrichtung (12) zum Senden/Empfangen von Daten zur bilateralen Kommunikation zwischen der zentralen Steuerungsstation (101) und der wenigstens einen lokalen Vorrichtung (1); und
- einer Einrichtung (103) zum integrierten Verarbeiten der Umgebungsdaten, die durch die wenigstens eine lokale Vorrichtung (1) erfasst worden sind, und der Daten, die in der Speichereinrichtung (102) enthalten sind, und die dafür ausgebildet ist, als ihr Ausgangssignal ein Modell der Evolution der Wärmefront zu liefern, welche die Folge einer kritischen thermischen Veränderung ist, und einen Interventionsplan zum Begrenzen der damit verbundenen Schäden,
wobei die Erfassungseinrichtung der wenigstens einen lokalen Vorrichtung (1) umfasst: eine Branderkennungseinrichtung (9) zum Erkennen von Energieemissionen im IR-Bereich; eine Erfassungseinrichtung (10) für meteorologische Daten; und eine Bilderfassungseinrichtung (7), die wenigstens eine Telekamera (8) umfasst, welche im sichtbaren Bereich arbeitet, wobei die Branderkennungseinrichtung (9) dafür ausgebildet ist, die Aktivierung der Telekamera (8) als Antwort auf das Erkennen von Energieemissionen hin, welche einen vorbestimmten Schwellenwert überschreiten, zu bewirken, und
wobei die wenigstens eine lokale Vorrichtung (1) eine eigene Stromversorgungseinrichtung (13, 14) und eine Tragkonstruktion (3) aufweist, welche die Erfassungseinrichtung (9) trägt und dafür ausgebildet ist, am Boden an einem gewünschten Ort verankert zu werden.

2. System (100) nach Anspruch 1, mit einer Vielzahl von lokalen Vorrichtungen (1), die dafür ausgebildet sind, in der zu überwachenden Umgebung installiert zu werden.

3. System (100) nach einem der vorhergehenden Ansprüche, mit einer Einrichtung (17) zum Verarbeiten der Energieemissionen, die durch die Erkennungseinrichtung (9) erkannt werden, und die dafür ausgebildet ist, die Emissionen in einer Vielzahl von Emissionsbändern zu analysieren.

4. System (100) nach einem der vorhergehenden Ansprüche, wobei die Erkennungseinrichtung (9) wenigstens eine Wärmekamera umfasst, die im IR-Bereich arbeitet.

5. System (100) nach dem vorhergehenden Anspruch, wobei die Wärmekamera mit einem mikrobolometrischen IR-Sensor versehen ist.

6. System (100) nach einem der vorhergehenden Ansprüche, wobei die Einrichtung (12) zum Senden/Empfangen von Daten in der Lage ist, Bilder aus der (den) lokalen Vorrichtung(en) (1) zu der zentralen Steuerungsstation (101) in einer sichtbaren und/oder IR-Betriebsart zu übertragen.

7. System (100) nach einem der vorhergehenden Ansprüche, wobei die Erkennungseinrichtung (10) für meteorologische Daten eine Erfassungseinrichtung aufweist, die aus einer Gruppe ausgewählt ist, welche Einrichtungen umfasst zum Messen der Windgeschwindigkeit und -richtung, der Feuchtigkeit, des Druckes, der Luft- und Bodentemperatur und der Taupunktstemperatur.

8. System (100) nach dem vorhergehenden Anspruch, wobei die Erkennungseinrichtung (10) für meteorologische Daten mit Sensoren ausrüstbar ist zum Erkennen von Parametern, die als notwendig angesehen werden für die korrekte Analyse der Erscheinung von thermischen Veränderungen und von deren Evolutionsmodell.

9. System (100) nach einem der vorhergehenden Ansprüche, wobei die Erfassungseinrichtungen eine Lokalisierungseinrichtung (11) umfassen, die dafür ausgebildet ist, die automatische Bestimmung der geografischen Koordinaten der zugeordneten lokalen Vorrichtung (1) zu erlauben.

10. System (100) nach einem der vorhergehenden Ansprüche, mit Einrichtungen (17, 11), die dafür ausgebildet sind, die geographischen Koordinaten einer thermischen Veränderung zu bestimmen, welche durch die Einrichtung (9) zum Erfassen von Umgebungsdaten erkannt wird.

11. System (100) nach einem der vorhergehenden Ansprüche, wobei wenigstens eine lokale Vorrichtung (1) eine lokale Verarbeitungseinrichtung (17) für die erfassten Daten aufweist.

12. System (100) nach einem der vorhergehenden Ansprüche, wobei wenigstens eine lokale Vorrichtung (1) eine lokale Speichereinrichtung (18) für die erfassten Daten aufweist.

13. System (100) nach einem der vorhergehenden Ansprüche, wobei die Tragkonstruktion (3) zum Tragen der Erfassungseinrichtung (9) im Wesentlichen die Form eines Dreibeins hat.

14. System (100) nach dem vorhergehenden Anspruch, wobei die Tragkonstruktion (3) eine Plattform (6) umfasst, die entsprechend einem oberen Teil der Konstruktion selbst positioniert ist.

15. System (100) nach einem der vorhergehenden Ansprüche, wobei wenigstens eine lokale Vorrichtung (1) eine drehbare Plattform (93) zum Tragen der Erfassungseinrichtungen (7, 8, 9, 10) aufweist.

16. System (100) nach einem der vorhergehenden Ansprüche, wobei der Interventionsplan die Anzeige von wenigstens einem optimalen Zugangspfad zum Erreichen des Gebiets enthält, das von einer kritischen thermischen Veränderung betroffen ist.

17. System (100) nach einem der vorhergehenden Ansprüche, wobei der Interventionsplan einen Schätzwert der Start- und/oder Endzeiten der Intervention enthält.

18. System (100) nach einem der vorhergehenden Ansprüche, wobei die zentrale Steuerungsstation (101) eine Schnittstelleneinrichtung (104) umfasst, um Bedienungspersonen zu erlauben, einen Interventionsplan auszuwählen, und wobei die integrierte Verarbeitungseinrichtung (103) in der Lage ist, das Modell der Evolution der Wärmefront gemäß dem durch die Bedienungspersonen der zentralen Steuerungsstation (101) ausgewählten Interventionsplan adaptiv zu modifizieren.

19. System (100) nach einem der vorhergehenden Ansprüche, wobei die integrierte Verarbeitungseinrichtung (103) eine Einrichtung aufweist, die dafür ausgebildet ist, die erfasste thermische Veränderung gemäß einem Gefahrenindex zu klassifizieren.

20. System (100) nach einem der vorhergehenden Ansprüche, wobei die zentrale Steuerungsstation (101) eine Schnittstelleneinrichtung (104) aufweist, die dafür ausgebildet ist, den Bedienungspersonen die durch die lokale(n) Vorrichtungen(en) (1) erfassten Daten und die von der integrierten Verarbeitungseinrichtung (103) abgegebenen Daten zu übermitteln, und dafür ausgebildet ist, die Befragung der Speichereinrichtung (102) zu erlauben.

21. System (100) nach einem der vorhergehenden Ansprüche, wobei die zentrale Steuerungsstation (101) eine Schnittstelleneinrichtung (104) aufweist, die dafür ausgebildet ist, das Management der Erfassungseinrichtungen (7, 8, 9, 10) der lokalen Vorrichtung(en) (1) durch die Bedienungspersonen der zentralen Station zu erlauben.

22. System (100) nach einem der vorhergehenden Ansprüche, mit einer Einrichtung (105) zum Kommunizieren mit Agenturen zum Ausführen des Interventionsplanes.

23. Verfahren zur Umgebungsüberwachung, beinhaltend die Schritte:
a) Installieren von wenigstens einer unbemannten, auf dem Boden anzuordnenden lokalen Vorrichtung (1), die Erfassungseinrichtungen (7, 8, 9, 10) zum Erfassen von Umgebungsdaten hat und dafür ausgebildet ist, kritische thermische Veränderungen in dem interessierenden Gebiet zu erkennen, auf dem zu überwachenden Territorium;
b) Speichern von logistischen technischen Daten und von Daten über verfügbare Interventionseinrichtungen, welche sich auf die überwachte Umgebung beziehen, in einer zentralen Steuerungsstation (101) und;
c) Verarbeiten der erfassten Umgebungsdaten und der gespeicherten logistischen technischen Daten in einer integrierten Betriebsart derart, dass ein Modell der Evolution der Wärmefront geschaffen wird, welche die Konsequenz einer kritischen thermischen Veränderung ist, und eines Interventionsplans zum Begrenzen der damit verbundenen Schäden,
wobei die Erfassungseinrichtung der wenigstens einen lokalen Vorrichtung (1) aufweist: eine Branderfassungseinrichtung (9) zum Erkennen von Energieemissionen im IR-Bereich; eine Erkennungseinrichtung (10) für meteorologische Daten; und eine Bilderfassungseinrichtung (7), die wenigstens eine Telekamera (8) aufweist, welche im sichtbaren Bereich arbeitet, wobei die Branderkennungseinrichtung (9) in der Lage ist, die Aktivierung der Telekamera (8) auf das Erfassen von Energieemissionen hin, welche einen vorbestimmten Schwellenwert überschreiten, zu bewirken, und wobei die wenigstens eine lokale Vorrichtung (1) eine eigene Stromversorgungseinrichtung (13, 14) und eine Tragkonstruktion (3), welche die Erfassungseinrichtung (9) trägt und dafür ausgebildet ist, auf dem Boden an einem gewünschten Ort verankert zu werden, aufweist.

24. Verfahren nach Anspruch 23, wobei der Schritt a) vorsieht, dass mehrere Erfassungseinrichtungen (7, 8, 9, 10) installiert werden, die in der zu überwachenden Umgebung verteilt werden.

25. Verfahren nach Anspruch 23 oder 24, beinhaltend einen Schritt zum Verarbeiten der Energieemissionen, die durch die Erkennungseinrichtung (9) erkannt werden, wobei die verfassten Daten in mehreren Emissionsbändern analysiert werden.

26. Verfahren nach einem der Ansprüche 23 bis 25, beinhaltend den Schritt, Daten aus der Erfassungseinrichtung (9) zu der zentralen Steuerungsstation (101) zu übertragen, die für die Übertragung von Bildern in einer Sichtbar- und/oder IR-Betriebsart sorgt.

27. Verfahren nach einem der Ansprüche 23 bis 26, beinhaltend einen Schritt zum Bestimmen der geographischen Koordinaten einer thermischen Veränderung, die durch die Einrichtung (9) zum Erfassen von Umgebungsdaten erkannt wird.

28. Verfahren nach einem der Ansprüche 23 bis 27, wobei der Interventionsplan die Angabe von wenigstens einem optimalen Zugangspfad zum Erreichen des von der kritischen thermischen Veränderung betroffenen Gebietes enthält.

29. Verfahren nach einem der Ansprüche 23 bis 28, wobei der Interventionsplan einen Schätzwert der Start- und/oder Endzeiten der Intervention enthält.

30. Verfahren nach einem der Ansprüche 23 bis 29, wobei der Schritt c) für eine adaptive Modifikation des Evolutionsmodells der Wärmefront gemäß dem Interventionsplan sorgt, der durch die Bedienungspersonen der zentralen Steuerungsstation (101) ausgewählt worden ist.

31. Verfahren nach einem der Ansprüche 23 bis 30, wobei der Schritt c) das Klassifizieren der erfassten thermischen Veränderung gemäß einem Gefahrenindex beinhaltet.

## Revendications

1. Système de surveillance de l'environnement (100), comportant :
- au moins un dispositif local au sol, inhabité (1), susceptible d'être installé dans l'environnement à surveiller et ayant des moyens d'acquisition (7, 8, 9, 10) pour acquérir des données environnementales susceptibles de détecter des variations thermiques critiques dans la zone d'intérêt,
- une station de commande centrale (101), comportant des moyens de mémorisation (102) pour mémoriser des données logistiques-techniques et des données concernant les moyens d'intervention disponibles appartenant à l'environnement surveillé,
- des moyens (12) pour transmettre/recevoir des données, en vue d'une communication bilatérale entre ladite station de commande centrale (101) et ledit au moins un dispositif local (1), et
- des moyens (103) pour le traitement intégré des données environnementales acquises par ledit au moins un dispositif local (1) et des données contenues dans lesdits moyens de mémorisation (102), susceptibles de fournir en tant que leur sortie un modèle d'évolution du front thermique consécutif à une variation thermique critique et un plan d'intervention pour limiter les dommages associés à celle-ci,
dans lequel lesdits moyens d'acquisition dudit au moins un dispositif local (1) comportent : des moyens de détection d'incendie (9) pour détecter des émissions d'énergie dans la plage infrarouge, des moyens de détection de données météorologiques (10), et des moyens d'acquisition d'image (7) comportant au moins une caméra de prises de vues (8) qui fonctionne dans la plage visible, lesdits moyens de détection d'incendie (9) étant susceptibles de déterminer l'activation de ladite caméra de prises de vues (8) en réponse à la détection d'émissions d'énergie dépassant un seuil prédéterminé,
et ledit au moins un dispositif local (1) comportant également des moyens d'alimentation propre (13, 14) et une structure de support (3) supportant lesdits moyens d'acquisition (9) et étant susceptibles d'être fixés au sol à un emplacement voulu.

2. Système (100) selon la revendication 1, comportant une pluralité de dispositifs locaux (1) susceptibles d'être installés dans l'environnement à surveiller.

3. Système (100) selon l'une quelconque des revendications précédentes, comportant des moyens (17) pour traiter les émissions d'énergie détectées par lesdits moyens de détection (9) susceptibles d'analyser lesdites émissions sur une pluralité de bandes d'émission.

4. Système (100) selon l'une quelconque des revendications précédentes, dans lequel lesdits moyens de détection (9) comportent au moins une caméra thermique fonctionnant dans la plage infrarouge.

5. Système (100) selon l'une quelconque des revendications précédentes, dans lequel ladite caméra thermique est munie d'un détecteur micro-bolométrique infrarouge.

6. Système (100) selon l'une quelconque des revendications précédentes, dans lequel lesdits moyens (12) pour transmettre/recevoir des données sont capables de transmettre des images depuis ledit ou lesdits dispositifs locaux (1) à ladite station de commande centrale (101) dans un mode visible et/ou infrarouge.

7. Système (100) selon l'une quelconque des revendications précédentes, dans lequel lesdits moyens de détection de données météorologiques (10) comportent des moyens d'acquisition sélectionnés dans un groupe comportant des moyens pour mesurer la vitesse et la direction du vent , l'humidité, la pression, la température de l'air et du sol et le point de rosée.

8. Système (100) selon l'une quelconque des revendications précédentes, dans lequel lesdits moyens de détection de données météorologiques (10) peuvent être mis en oeuvre à l'aide de capteurs pour détecter des paramètres considérés nécessaires pour l'analyse correcte du phénomène de variations thermiques et de son modèle d'évolution.

9. Système (100) selon l'une quelconque des revendications précédentes, dans lequel lesdits moyens d'acquisition comportent des moyens de localisation (11) susceptibles de permettre la détermination automatique des coordonnées géographiques du dispositif local associé (1).

10. Système (100) selon l'une quelconque des revendications précédentes, comportant des moyens (17, 11) susceptibles de déterminer les coordonnées géographiques d'une variation thermique détectée par lesdits moyens (9) pour acquérir des données environnementales.

11. Système (100) selon l'une quelconque des revendications précédentes, dans lequel au moins l'un dudit ou desdits dispositifs locaux (1) comporte des moyens de traitement locaux (17) des données acquises.

12. Système (100) selon l'une quelconque des revendications précédentes, dans lequel au moins l'un dudit ou desdits dispositifs locaux (1) comporte des moyens de mémorisation locaux (18) des données acquises.

13. Système (100) selon l'une quelconque des revendications précédentes, dans lequel ladite structure de support (3) pour supporter lesdits moyens d'acquisition (9) a en grande partie une forme de trépied.

14. Système (100) selon l'une quelconque des revendications précédentes, dans lequel ladite structure de support (3) comporte une plate-forme (6) positionnée en correspondance avec une partie supérieure de la structure elle-même.

15. Système (100) selon l'une quelconque des revendications précédentes, dans lequel au moins l'un dudit ou desdits dispositifs locaux (1) comporte une plate-forme rotative (93) pour supporter lesdits moyens d'acquisition (7, 8, 9, 10).

16. Système (100) selon l'une quelconque des revendications précédentes, dans lequel ledit plan d'intervention contient l'indication d'au moins un trajet d'accès optimal pour atteindre la zone concernée par une variation thermique critique.

17. Système (100) selon l'une quelconque des revendications précédentes, dans lequel ledit plan d'intervention contient une estimation des heures de début et/ou de fin de l'intervention.

18. Système (100) selon l'une quelconque des revendications précédentes, dans lequel ladite station de commande centrale (101) comportent des moyens d'interface (104) pour permettre aux opérateurs de sélectionner un plan d'intervention et dans lequel lesdits moyens de traitement intégrés (103) sont susceptibles de modifier de manière adaptative ledit modèle d'évolution du front thermique conformément au plan d'intervention sélectionné par les opérateurs de ladite station de commande centrale (101).

19. Système (100) selon l'une quelconque des revendications précédentes, dans lequel lesdits moyens de traitement intégrés (103) comportent des moyens susceptibles de classer la variation thermique détectée conformément à un indice de danger.

20. Système (100) selon l'une quelconque des revendications précédentes, dans lequel ladite station de commande centrale (101) comporte des moyens d'interface (104) susceptibles de communiquer aux opérateurs les données acquises par le ou les dispositifs locaux (1) et les données de sortie provenant desdits moyens de traitement intégrés (103) et susceptibles de permettre l'interrogation desdits moyens de mémorisation (102).

21. Système (100) selon l'une quelconque des revendications précédentes, dans lequel ladite station de commande centrale (101) comporte des moyens d'interface (101) susceptibles de permettre la gestion desdits moyens d'acquisition (7, 8, 9, 10) et du ou des dispositifs locaux (1) par les opérateurs de ladite station centrale.

22. Système (100) selon l'une quelconque des revendications précédentes, comportant des moyens (105) pour communiquer avec des agences pour mettre en oeuvre ledit plan d'intervention.

23. Procédé pour une surveillance environnementale, comportant les phases consistant à :
(a) installer sur le territoire à surveiller au moins un dispositif local au sol, inhabité (1) ayant des moyens d'acquisition (7, 8, 9, 10) pour acquérir des données environnementales susceptibles de détecter des variations thermiques critiques dans la zone d'intérêt,
(b) mémoriser dans une station de commande centrale (101) des données logistiques-techniques et des données concernant les moyens d'intervention disponibles concernant l'environnement surveillé, et
(c) traiter, dans un mode intégré, les données environnementales acquises et les données logistiques-techniques mémorisées de manière à délivrer un modèle d'évolution du front thermique consécutif à une variation thermique critique et un plan d'intervention pour limiter les dommages associés à celle-ci,
dans lequel lesdits moyens d'acquisition dudit au moins un dispositif local (1) comportent : des moyens de détection d'incendie (9) pour détecter des émissions d'énergie dans la plage infrarouge, des moyens de détection de données météorologiques (10), et des moyens d'acquisition d'image (7) comportant au moins une caméra de prises de vues (8) qui fonctionne dans la plage visible, lesdits moyens de détection d'incendie (9) étant susceptibles de déterminer l'activation de ladite caméra de prises de vues (8) en réponse à la détection d'émissions d'énergie dépassant un seuil prédéterminé, et dans lequel ledit au moins un dispositif local (1) comporte des moyens d'alimentation propre (13, 14) et une structure de support (3) supportant lesdits moyens d'acquisition (9) et susceptibles d'être fixés au sol au niveau d'un emplacement voulu.

24. Procédé selon la revendication 23, dans lequel ladite phase (a) assure l'installation d'une pluralité de moyens d'acquisition (7, 8, 9, 10) répartis dans l'environnement à surveiller.

25. Procédé selon la revendication 23 ou 24, comportant une phase de traitement des émissions d'énergie détectées par les moyens de détection (9), les données acquises étant analysées sur une pluralité de bandes d'émission.

26. Procédé selon l'une quelconque des revendications 23 à 25, comportant une phase de transmission des données depuis lesdits moyens d'acquisition (9) à ladite station de commande centrale (101) qui permet la transmission d'image dans un mode visible et/ou infrarouge.

27. Procédé selon l'une quelconque des revendications 23 à 26, comportant une phase de détermination des coordonnées géographiques d'une variation thermique détectée par lesdits moyens (9) pour acquérir des données environnementales.

28. Procédé selon l'une quelconque des revendications 23 à 27, dans lequel ledit plan d'intervention contient l'indication d'au moins un trajet d'accès optimal pour atteindre la zone affectée par une variation thermique critique.

29. Procédé selon l'une quelconque des revendications 23 à 28, dans lequel ledit plan d'intervention contient une estimation des heures de début et/ou de fin de l'intervention.

30. Procédé selon l'une quelconque des revendications 23 à 29, dans lequel ladite phase (c) permet une modification adaptative du modèle d'évolution du front thermique conformément au plan d'intervention sélectionné par les opérateurs de ladite station de commande centrale (101).

31. Procédé selon l'une quelconque des revendications 23 à 30, dans lequel ladite phase (c) permet de classer la variation thermique détectée conformément à un indice de danger.
